# FASCICULE DE BREVET EUROPEEN

(11) **EP 0 915 307 B1**
(45) Date de publication et mention de la délivrance du brevet: **20.08.2003**
(21) Numéro de dépôt: 98120654.3
(22) Date de dépôt: 04.11.1998
(51) Int. Cl.: F25B 39/04, B60H 1/32, F25B 43/00

(54) **Condenseur de climatisation muni d'un réservoir de fluide à cartouche interchangeable**
Kondensor für Klimaanlage mit Flüssigkeitsbehälter mit auswechselbarer Patrone
Condensor for air-conditioning with fluid reservoir with interchangeable cartridge

(30) Priorité: 10.11.1997 FR 9714099
(43) Date de publication de la demande: 12.05.1999
(73) Titulaire: VALEO THERMIQUE MOTEUR, 78321 La Verrière (FR)
(72) Inventeur: Gille, Gérard, 91550 Paray Vieille Poste (FR); Balthazard, Patrick, 02190 Guignicourt (FR)

(56) Documents cités:
- EP-A- 0 769 666
- CH-A- 683 556
- DE-A- 3 416 304
- PATENT ABSTRACTS OF JAPAN vol. 097, no. 006, 30 juin 1997 & JP 09 053868 A (CALSONIC CORP;NISSAN MOTOR CO LTD), 25 février 1997

## Description

L'invention concerne un condenseur, notamment pour un fluide réfrigérant dans un dispositif de climatisation de l'habitacle d'un véhicule automobile, comprenant une boîte collectrice et un réservoir intermédiaire allongé pour le traitement et/ou l'accumulation d'un fluide, qui se fixe de manière amovible sur une embase solidaire de la boîte collectrice, traversée par deux conduites de liaison pour le transfert du fluide entre la boîte collectrice et le réservoir.

Dans un tel condenseur, comme il est bien connu, le réservoir intermédiaire peut remplir tout ou partie des fonctions suivantes: filtration et/ou déshydratation du fluide réfrigérant, compensation des variations de volume de celui-ci, séparation des phases liquide et gazeuse. Sa position intermédiaire par rapport au condenseur permet de ne faire circuler dans la partie de celui-ci située en aval du réservoir que du fluide à l'état liquide, qui est ainsi sous-refroidi au dessous de la température d'équilibre liquide/gaz, améliorant les performances du condenseur et rendant celles-ci relativement indépendantes de la quantité de fluide contenue dans le circuit.

EP-A-0 480 330 décrit, dans un condenseur de climatisation de véhicule, un réservoir intermédiaire qui se fixe de manière amovible sur une embase solidaire de la boîte collectrice, traversée par les deux conduites de liaison.

Ce réservoir est muni à son extrémité inférieure d'une tête solidaire de sa paroi, qui est fixée sur l'embase au moyen d'une vis. Les conduites de liaison s'étendent pour partie dans l'embase et pour partie dans la tête du réservoir.

EP-A-0 480 330 montre les caractéristiques du préambule de la revendication 1.

Cette réalisation connue est relativement complexe et encombrante. De plus, si le réservoir contient des agents de traitement, notamment pour la filtration et/ou la déshydratation du fluide, il doit être remplacé après épuisement de ces agents. Pour cela, il faut dévisser la vis de fixation, ce qui peut comporter de sérieuses difficultés en fonction de l'accessibilité dans le véhicule.

Le but de l'invention est de remédier aux inconvénients ci-dessus.

L'invention vise notamment un condenseur comprenant une boîte collectrice et un réservoir intermédiaire allongé pour le traitement et l'accumulation d'un fluide, qui se fixe de manière amovible sur une embase solidaire de la. boîte collectrice, traversée par deux conduites de liaison pour le transfert du fluide entre la boîte collectrice et le réservoir.

Selon l'invention, le réservoir contient une cartouche de traitement interchangeable qui peut être retirée par la première extrémité lorsque le réservoir est séparé de l'embase.

Des caractéristiques optionnelles de l'invention, complémentaires ou alternatives, sont énoncées ci-après:
- La boîte collectrice est allongée côte à côte avec le réservoir et le réservoir est relié à la boîte collectrice par une bride de maintien au voisinage de sa seconde extrémité.
- La cartouche est allongée dans la direction longitudinale du réservoir et présente une section transversale plus petite que la section interne du réservoir de manière à définir le long de celui-ci deux portions de trajet en série et en sens inverse pour le fluide, l'une à l'extérieur et l'autre à l'intérieur de la cartouche, entre les deux conduites de liaison.
- La cartouche comporte une enveloppe tubulaire garnie d'agents actifs, avantageusement fermée à son extrémité tournée à l'opposé de la première extrémité du réservoir et dont la paroi latérale présente des ouvertures pour le passage du fluide.
- La cartouche se prolonge par une tubulure axiale de passage de fluide qui fait saillie à la première extrémité du réservoir pour se raccorder à l'intérieur de l'embase à une première desdites conduites de liaison.
- La cartouche présente sur une fraction de son périmètre une nervure faisant saillie radialement vers l'extérieur et emprisonnée axialement entre la première extrémité du réservoir et un épaulement de l'embase pour assurer l'immobilisation de la cartouche.
- La première conduite s'étend sensiblement perpendiculairement à la direction longitudinale du réservoir.
- La seconde conduite est oblique par rapport à la direction longitudinale du réservoir, et s'éloigne de la première conduite en direction de la boîte collectrice.
- L'embase présente trois alésages sensiblement concourants, deux d'entre eux définissant les première et seconde conduites et le troisième définissant un siège pour le réservoir et des espaces pour le transfert du fluide entre celui-ci et lesdites conduites.
- L'extrémité libre de la tubulure s'ajuste dans le troisième alésage, à partir d'un épaulement rétrécissant celui-ci et de part et d'autre duquel il communique avec les première et seconde conduites respectivement, et la tubulure présente une lèvre annulaire inclinée dont le bord libre s'appuie sur le même épaulement.
- Les première et seconde conduites sont disposées respectivement en aval et en amont du réservoir.
- L'embase est brasée sur la face externe d'une paroi tubulaire délimitant la boîte collectrice.
- Les conduites de liaison s'étendent sensiblement tangentiellement par rapport à ladite paroi tubulaire et débouchent latéralement à travers celle-ci.

Les caractéristiques et avantages de l'invention seront exposés plus en détail dans la description ci-après, en se référant aux dessins annexés, sur lesquels:
- la figure 1 est une vue de face d'un condenseur selon l'invention;
- la figure 2 est une vue en perspective de ce condenseur;
- la figure 3 est un schéma d'un circuit de fluide réfrigérant incorporant le condenseur;
- la figure 4 est une vue en perspective avec coupe longitudinale de l'embase et du réservoir appartenant au condenseur des figures 1 et 2; et
- la figure 5 est une vue en coupe médiane de l'embase et de la partie inférieure du réservoir.

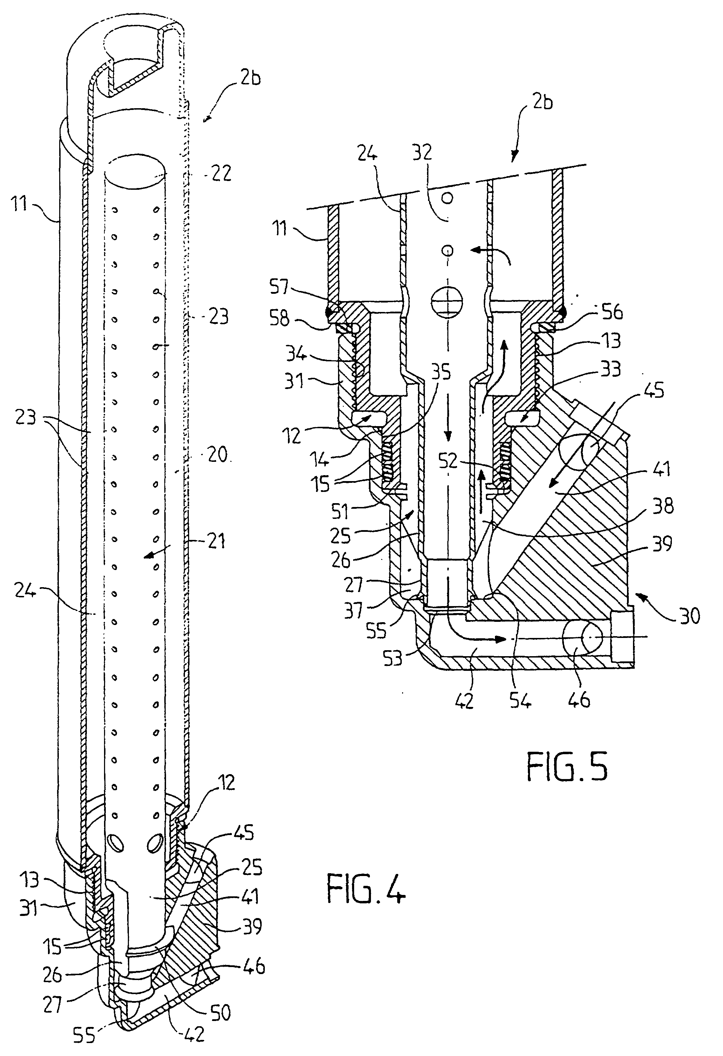

La figure 3 est un schéma d'un circuit de fluide réfrigérant faisant partie d'un dispositif de climatisation de l'habitacle d'un véhicule automobile. De manière connue, ce circuit comprend successivement un compresseur 1, un ensemble 2 désigné ci-après sous le nom de condenseur, un détendeur 3 et un évaporateur 4. Le condenseur 2 comporte une section amont 2a dans laquelle le fluide réfrigérant cède de la chaleur à un flux d'air de manière à se condenser, après avoir été le cas échéant "désurchauffé" à partir d'une température d'entrée supérieure à la température d'équilibre liquide/gaz. La section 2a est suivie d'un réservoir intermédiaire 2b, puis d'une section aval 2c dans laquelle le fluide est sous-refroidi par échange de chaleur avec le flux d'air.

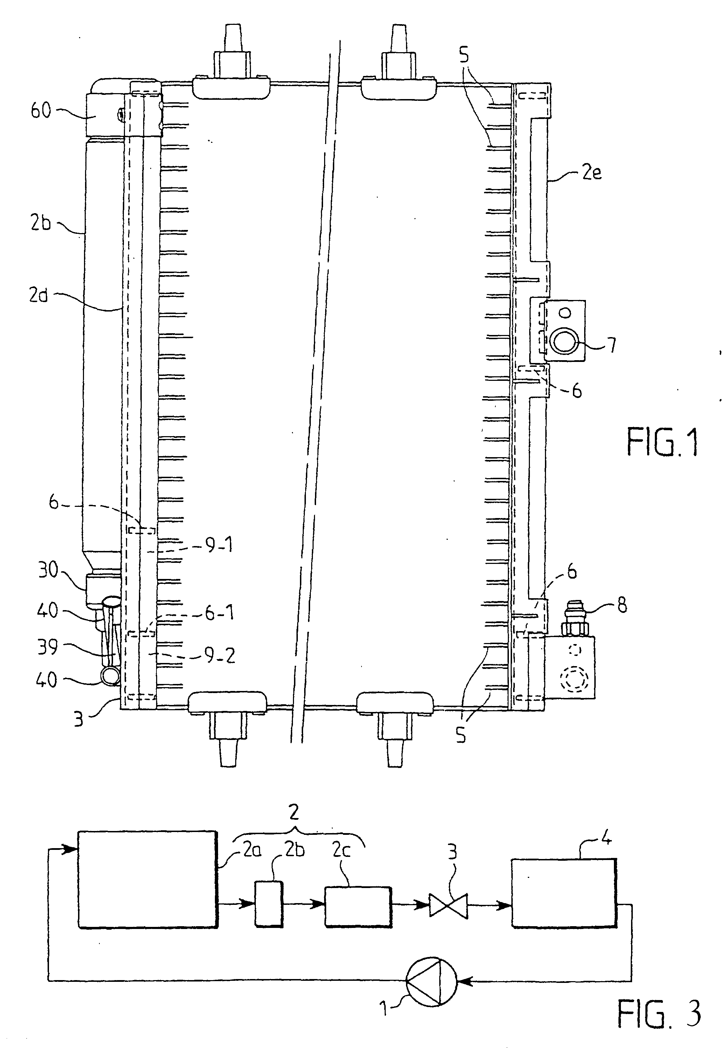

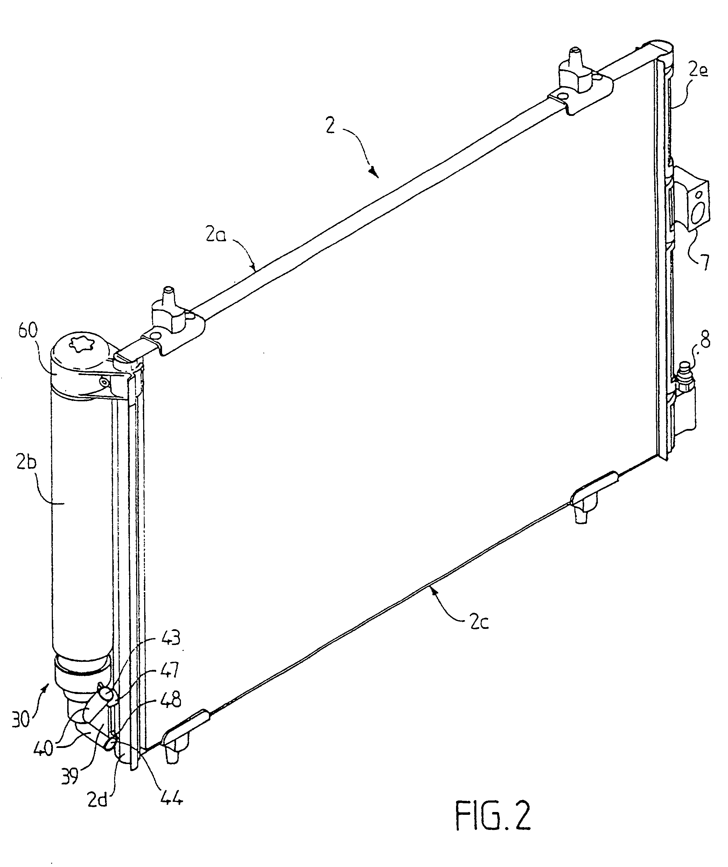

Un exemple de réalisation du condenseur 2 est montré dans sa structure générale sur les figures 1 et 2. Il comprend deux boîtes collectrices 2d, 2e allongées verticalement et écartées l'une de l'autre dans une direction horizontale, reliées entre elles par une multiplicité de tubes de circulation de fluide horizontaux 5. Chaque boîte collectrice est divisée en différentes chambres par des cloisons horizontales 6 de manière que le fluide circule, dans les tubes 5, alternativement d'une chambre de la boîte 2d à une chambre de la boîte 2e et inversement, depuis la chambre supérieure de la boîte 2e, qui communique avec une tubulure d'entrée 7, jusqu'à la chambre inférieure de la même boîte 2e, qui communique avec une tubulure de sortie 8.

L'une des cloisons intermédiaires de la boîte collectrice 2d, désignée par la référence 6-1, sépare l'une de l'autre des chambres 9-1 et 9-2, situées respectivement au-dessus et au-dessous de la cloison 6-1, et qui communiquent entre elles exclusivement par l'intermédiaire du réservoir 2b, lequel est allongé verticalement et s'étend le long de la boîte 2d.

Comme on le voit plus particulièrement sur les figures 4 et 5, le réservoir 2b comprend un boîtier formé d'un corps cylindrique 11 occupant la majeure partie de sa hauteur, et d'un col rétréci 12 disposé à sa partie inférieure. Le col 12 présente à son tour une région 13 munie d'un filetage mâle et, au dessous de cette région filetée, une région 14 de plus petit diamètre, creusée de deux gorges circonférentielles pour le logement de deux joints toriques d'étanchéité 15.

Une cartouche filtrante et déshydratante 20 est disposée dans le réservoir 2b, selon l'axe longitudinal de celui-ci. Cette cartouche comporte une enveloppe tubulaire 21 qui peut être fermée à son extrémité supérieure 22 et qui est traversée par des orifices 23 répartis sur sa hauteur. L'enveloppe est garnie de particules propres à filtrer et déshydrater le fluide. L'enveloppe 21 est divisée dans sa hauteur en trois régions de sections transversales différentes. Une région principale 24, s'étendant de l'extrémité supérieure de l'enveloppe jusqu'à l'intérieur de la région filetée 13 du boîtier du réservoir et dans laquelle sont ménagés les orifices 23, présente une section transversale circulaire d'un diamètre légèrement inférieur au diamètre intérieur minimal du boîtier, c'est-à-dire au diamètre de la région 14 de celui-ci. La région 24 est suivie vers le bas par une région 25 dont la section transversale est réduite par l'aménagement de deux méplats diamétralement opposés 26. Enfin, une région inférieure 27 présente de nouveau une section transversale circulaire, d'un diamètre légèrement inférieur à la distance entre les méplats 26. La partie inférieure de la région 25 et la région 27 font saillie au-dessous du col 12 du réservoir en formant une tubulure de sortie de celui-ci, comme on le verra plus loin.

Le réservoir 2b est en liaison mécanique et de communication de fluide avec la boîte collectrice 2d par l'intermédiaire d'une embase 30 qui est représentée en détail sur les figures 4 et 5. Cette embase est de préférence une pièce moulée en alliage d'aluminium, définissant une paroi 31 sensiblement de révolution autour d'un axe vertical 32, qui est aussi l'axe du réservoir et de la cartouche. La paroi 31 délimite un alésage 33 ouvert vers le haut pour recevoir le col du réservoir 2b. La surface latérale de l'alésage 33 présente dans une région supérieure un filetage femelle 34 coopérant avec le filetage 13 du réservoir. Une région médiane cylindrique 35 coopère avec les joints d'étanchéité 15, et une région inférieure cylindrique 36 entoure la tubulure 25, 27 et délimite avec la région 27 un espace annulaire 37 qui communique avec l'intérieur du réservoir par deux cheminées 38 situées en regard des méplats 26.

À la paroi 31 se raccorde un voile 39 s'étendant sensiblement selon un plan passant par l'axe 32. Ce voile présente, de part et d'autre de ce plan, des renflements 40 qui permettent de loger deux conduites 41, 42 allongées parallèlement à ce plan. Dans une étape intermédiaire de la fabrication de l'embase, comme le montre la figure 5, la conduite 41 débouche par ses deux extrémités respectivement dans l'alésage 33, au niveau de l'espace annulaire 37, et dans le bord libre du voile 39, et est inclinée vers le haut de l'une vers l'autre. La conduite 42 s'étend horizontalement depuis le bord libre du voile jusqu'au fond de l'alésage 33, auquel elle se raccorde. Dans l'embase terminée, des bouchons brasés 43, 44, montrés sur la figure 2, obturent de manière étanche les extrémités libres des conduites 41, 42 et celles-ci débouchent à l'extérieur de l'embase exclusivement par des passages 45, 46 ménagés dans des bossages latéraux 47, 48 formés sur les renflements 40.

La paroi tubulaire 21 de la cartouche présente une nervure circonférentielle extérieure 50, formée de deux parties diamétralement opposées s'étendant chacune en arc de cercle entre les deux méplats 26 de la région 25. La nervure 50 est emprisonnée, lors du vissage du réservoir sur l'embase, entre l'extrémité inférieure 51 du col et un épaulement 52 de la paroi 31 situé en regard de celle-ci. La nervure 50 possède des faces supérieure et inférieure inclinées qui coopèrent avec des chanfreins ménagés sur le col et sur la paroi 31. Le positionnement de la cartouche est complété par l'ajustement de l'extrémité inférieure 53 de la région inférieure 27 dans l'alésage 34, immédiatement au-dessous d'un épaulement 54 de celui-ci qui limite vers le bas l'espace annulaire 37. En outre, la région 27 présente une lèvre annulaire inclinée 55 dont le bord libre s'appuie sur l'épaulement 54. Un joint d'étanchéité annulaire plat 56 est serré entre l'extrémité libre 57 de la paroi 31 et l'épaulement radial 58 raccordant le col 12 au corps 11 du réservoir.

L'embase 30 est fixée sur la boîte collectrice 2d par brasage des extrémités des bossages 47, 48 sur la face extérieure de la paroi tubulaire en tôle d'aluminium de la boîte, lors de l'assemblage du condenseur par brasage. Les passages 45 et 46 communiquent avec les chambres 9-1 et 9-2 respectivement de la boîte à fluide par des trous prévus dans la paroi tubulaire de celle-ci. Le fluide condensé parvenant dans la chambre 9-1 passe de celle-ci à l'espace annulaire 37 par le passage 45 et la conduite inclinée 41, puis pénètre dans le réservoir 2b, vissé dans l'embase, par les cheminées 38. La phase liquide passe alors, à travers les trous 23, dans la cartouche où il circule de haut en bas en étant desséché et filtré par les particules actives contenues dans celle-ci, tandis que la phase gazeuse résiduelle éventuelle se rassemble à la partie supérieure du réservoir. Le fluide quitte le réservoir, exclusivement à l'état liquide, par la tubulure 25, 27, et atteint la chambre 9-2 de la boîte collectrice 2d par la conduite horizontale 42 et le passage 46. Ainsi, les tubes 5 et les chambres des boîtes 2d et 2e situés plus haut que la cloison 6-1, y compris la chambre 9-1, constituent la section amont 2a du condenseur, tandis que les tubes et les chambres situés plus bas que cette cloison, y compris la chambre 9-2, constituent la section aval 2c.

Une bride de maintien 60 relie mécaniquement l'extrémité supérieure du réservoir 2b à celle de la boîte collectrice 2d pour une fixation plus stable du réservoir.

Le remplacement de la cartouche est particulièrement simple, puisqu'il suffit de dévisser le réservoir, d'extraire la cartouche usagée, d'introduire une cartouche neuve et de revisser le réservoir.

## Revendications

1. Condenseur (2), notamment pour un fluide réfrigérant dans un dispositif de climatisation de l'habitacle d'un véhicule automobile, comprenant une boîte collectrice (2d) et un réservoir intermédiaire allongé (2b) pour le traitement et/ou l'accumulation d'un fluide, qui se fixe de manière amovible sur une embase (30) solidaire de la boîte collectrice, traversée par deux conduites de liaison (41, 42) pour le transfert du fluide entre la boîte collectrice et le réservoir, **caractérisé en ce que** le réservoir est muni au voisinage d'une première (51) de ses extrémités de moyens' (13) de fixation à l'embase; lesdites conduites de liaison s'étendant dans celle-ci jusqu'en regard de ladite première extrémité et le réservoir contient une cartouche de traitement interchangeable (20) qui peut être retirée par la première extrémité lorsque le réservoir est séparé de l'embase.

2. Condenseur selon la revendication 1, **caractérisé en ce que** la boîte collectrice est allongée côte à côte avec le réservoir et que le réservoir est relié à la boîte collectrice par une bride de maintien (60) au voisinage de sa seconde extrémité (21).

3. Condenseur selon l'une des revendications 1 et 2, **caractérisé en ce que** la cartouche est allongée dans la direction longitudinale du réservoir et présente une section transversale plus petite que la section interne du réservoir de manière à définir le long de celui-ci deux portions de trajet en série et en sens inverse pour le fluide, l'une à l'extérieur et l'autre à l'intérieur de la cartouche, entre les deux conduites de liaison.

4. Condenseur selon la revendication 3, **caractérisé en ce que** la cartouche comporte une enveloppe tubulaire (21) garnie d'agents actifs, avantageusement fermée à son extrémité (22) tournée à l'opposé de la première extrémité du réservoir et dont la paroi latérale présente des ouvertures (23) pour le passage du fluide.

5. Condenseur selon l'une des revendications 3 et 4, **caractérisé en ce que** la cartouche se prolonge par une tubulure axiale (25, 27) de passage de fluide qui fait saillie à la première extrémité (51) du réservoir pour se raccorder à l'intérieur de l'embase à une première (42) desdites conduites de liaison.

6. Condenseur selon l'une des revendications 3 à 5, **caractérisé en ce que** la cartouche présente sur une fraction de son périmètre une nervure (50) faisant saillie radialement vers l'extérieur et emprisonnée axialement entre la première extrémité (51) du réservoir et un épaulement (52) de l'embase pour assurer l'immobilisation de la cartouche.

7. Condenseur selon l'une des revendications 3 à 6, **caractérisé en ce que** la première conduite (42) s'étend sensiblement perpendiculairement à la direction longitudinale du réservoir.

8. Condenseur selon l'une des revendications 3 à 7, **caractérisé en ce que** la seconde conduite (41) est oblique par rapport à la direction longitudinale du réservoir, et s'éloigne de la première conduite en direction de la boîte collectrice.

9. Condenseur selon la revendication 8, **caractérisé en ce que** l'embase présente trois alésages sensiblement concourants, deux d'entre eux définissant les première et seconde conduites (42, 41) et le troisième (33) définissant un siège pour le réservoir et des espaces (37, 38) pour le transfert du fluide entre celui-ci et lesdites conduites.

10. Condenseur selon la revendication 9, rattachée à la revendication 5, **caractérisé en ce que** une extrémité libre (53) de la tubulure (25, 27) s'ajuste dans le troisième alésage, à partir d'un épaulement (54) rétrécissant celui-ci et de part et d'autre duquel il communique avec les première et seconde conduites respectivement, et que la tubulure présente une lèvre annulaire (55) inclinée dont le bord libre s'appuie sur le même épaulement.

11. Condenseur selon l'une des revendications 3 à 10, **caractérisé en ce que** les première et seconde conduites (42, 41) sont disposées respectivement en aval et en amont du réservoir (2b).

12. Condenseur selon l'une des revendications précédentes, **caractérisé en ce que** l'embase (30) est brasée sur la face externe d'une paroi tubulaire délimitant la boîte collectrice (2d).

13. Condenseur selon la revendication 12, **caractérisé en ce que** les conduites de liaison (42, 41) s'étendent sensiblement tangentiellement par rapport à ladite paroi tubulaire et débouchent latéralement à travers celle-ci.

## Patentansprüche

1. Kondensator (2), insbesondere für ein Kühlfluid in einer Klimaanlage des Fahrgastraums eines Kraftfahrzeugs, der einen Sammelkasten (2d) und einen länglichen Vorratsbehälter (2b) für die Behandlung und/oder Speicherung eines Fluids umfasst, der sich auf abnehmbare Weise an einem mit dem Sammelkasten fest verbundenen Sockel (30) anbringen lässt, der von zwei Verbindungsleitungen (41, 42) für die Übertragung von Flüssigkeit zwischen dem Sammelkasten und dem Vorratsbehälter durchquert wird, **dadurch gekennzeichnet, dass** der Vorratsbehälter in der Nähe eines ersten (51) seiner Enden mit Mitteln (13) zur Befestigung an dem Sockel versehen ist, wobei die Verbindungsleitungen sich in diesem bis gegenüber dem ersten Ende erstrecken, und der Vorratsbehälter eine austauschbare Behandlungskartusche (20) enthält, die durch das erste Ende herausgezogen werden kann, wenn der Vorratsbehälter von dem Sockel getrennt wird.

2. Kondensator nach Anspruch 1, **dadurch gekennzeichnet, dass** der Sammelkasten Seite an Seite mit dem Vorratsbehälter liegt und dass der Vorratsbehälter mit dem Sammelkasten durch einen Halterungsflansch (60) in der Nähe seines zweiten Endes (21) verbunden ist.

3. Kondensator nach einem der Ansprüche 1 und 2, **dadurch gekennzeichnet, dass** die Kartusche in Längsrichtung des Vorratsbehälters liegt und einen transversalen Querschnitt aufweist, der kleiner als der interne Querschnitt des Vorratsbehälters ist, um längs von diesem für das Fluid zwischen den zwei Verbindungsleitungen zwei aufeinanderfolgende und in entgegengesetzter Richtung verlaufende Wegabschnitte, der eine außerhalb und der andere innerhalb der Kartusche, zu definieren.

4. Kondensator nach Anspruch 3, **dadurch gekennzeichnet, dass** die Kartuschen eine röhrenförmige, mit aktiven Wirkstoffen besetzte Hülle (21) umfasst, die vorteilhafterweise an ihrem einen, dem ersten Ende des Vorratsbehälters gegenüberliegenden Ende (22) geschlossen ist und deren Seitenwand Öffnungen (23) für den Durchtritt des Fluids aufweist.

5. Kondensator nach einem der Ansprüche 3 und 4, **dadurch gekennzeichnet, dass** die Kartusche sich in einem axialen Rohransatz (25, 27) zum Durchtritt von Fluid vorsetzt, der an dem ersten Ende (51) des Vorratsbehälters einen Vorsprung bildet, um im Inneren des Sockels an einer ersten (42) der Verbindungsleitungen anzuschließen.

6. Kondensator nach einem der Ansprüche 3 bis 5, **dadurch gekennzeichnet, dass** die Kartusche auf einem Teil ihres Umfangs eine Rippe (50) aufweist, die radial nach außen vorspringt und axial zwischen dem ersten Ende (51) des Vorratsbehälters und einem Anschlag (52) des Sockels eingeschlossen ist, um das Festliegen der Kartusche zu gewährleisten.

7. Kondensator nach einem der Ansprüche 3 bis 6, **dadurch gekennzeichnet, dass** die erste Leitung (42) im wesentlichen senkrecht zur Längsrichtung des Vorratsbehälters verläuft.

8. Kondensator nach einem der Ansprüche 3 bis 7, **dadurch gekennzeichnet, dass** die zweite Leitung (41) in Bezug zur Längsrichtung des Vorratsbehälters geneigt ist und sich von der ersten Leitung in Richtung des Sammelkastens entfernt.

9. Kondensator nach Anspruch 8, **dadurch gekennzeichnet, dass** der Sockel drei im wesentlichen konvergierende Zylinderbohrungen aufweist, von denen zwei die erste und zweite Leitung (42, 41) definieren und die dritte (33) einen Sitz für den Vorratsbehälter und Räume (37, 38) für die Übertragung von Fluid zwischen diesem und den Leitungen definiert.

10. Kondensator nach dem auf Anspruch 5 rückbezogenen Anspruch 9, **dadurch gekennzeichnet, dass** ein freies Ende (53) des Rohransatzes (25, 27) von einer Schulter (54) ab, die die dritte Zylinderbohrung verengt und auf deren beiden Seiten sie mit der ersten beziehungsweise der zweiten Leitung Verbindung hat, in diese eingepasst ist, und dass der Rohransatz eine ringförmige, geneigte Lippe (55) aufweist, deren freier Rand an dem gleichen Anschlag anliegt.

11. Kondensator nach einem der Ansprüche 3 bis 10, **dadurch gekennzeichnet, dass** die erste und zweite Leitung (42, 41) stromab beziehungsweise stromauf von dem Vorratsbehälter (2b) angeordnet sind.

12. Kondensator nach einem der vorhergehenden Ansprüche, **dadurch gekennzeichnet, dass** der Sockel (30) auf der Außenfläche einer rohrförmigen Wand aufgelötet ist, die den Sammelkasten (2d) begrenzt.

13. Kondensator nach Anspruch 12, **dadurch gekennzeichnet, dass** die Verbindungsleitungen (42, 41) im wesentlichen tangential in Bezug zu der rohrförmigen Wand verlaufen und seitlich durch diese hindurch münden.

## Claims

1. Condenser (2), particularly for a cooling fluid in a motor vehicle cabin air-conditioning device, comprising a collector box (2d) and an elongate intermediate reservoir (2b) for treating and/or accumulating a fluid, which is fixed removably to a base (30) secured to the collector box, through which two connecting ducts (41, 42) for transferring the fluid between the collector box and the reservoir pass, **characterized in that** the reservoir is equipped, near a first (51) of its ends, with means (13) of attachment to the base; the said connecting ducts running therein as far as opposite the said first end and the reservoir contains an interchangeable treatment cartridge (20) which can be withdrawn from the first end when the reservoir is separated from the base.

2. Condenser according to Claim 1, **characterized in that** the collector is elongate side by side with the reservoir and **in that** the reservoir is connected to the collector box by a holding clip (60) near its second end (21).

3. Condenser according to either of Claims 1 and 2, **characterized in that** the cartridge is elongate in the longitudinal direction of the reservoir and has a cross section smaller than the internal section of the reservoir so as to define, along the latter, two path portions in series and in opposite directions for the fluid, one on the outside and one on the inside of the cartridge, between the two connecting ducts.

4. Condenser according to Claim 3, **characterized in that** the cartridge comprises a tubular casing (21) lined with active agents, advantageously closed at its end (22) facing away from the first end of the reservoir and the side wall of which has openings (23) for the passage of the fluid.

5. Condenser according to either of Claims 3 and 4, **characterized in that** the cartridge is extended by an axial fluid-passage nozzle (25, 27) which projects at the first end (51) of the reservoir to connect, inside the base, to a first (42) of the said connecting ducts.

6. Condenser according to one of Claims 3 to 5, **characterized in that** the cartridge has, over a fraction of its perimeter, a rib (50) that projects radially outwards and is axially trapped between the first end (51) of the reservoir and a shoulder (52) of the base, so as to immobilize the cartridge.

7. Condenser according to one of Claims 3 to 6, **characterized in that** the first duct (42) runs roughly at right angles to the longitudinal direction of the reservoir.

8. Condenser according to one of Claims 3 to 7, **characterized in that** the second duct (41) is oblique with respect to the longitudinal direction of the reservoir and diverges from the first duct towards the collector box.

9. Condenser according to Claim 8, **characterized in that** the base has three roughly concurrent bores, two of them defining the first and second ducts (42, 41) and the third (33) defining a seat for the reservoir and spaces (37, 38) for the transfer of fluid between the latter and the said ducts.

10. Condenser according to Claim 9, attached to Claim 5, **characterized in that** a free end (53) of the nozzle (25, 27) fits into the third bore, from a shoulder (54) narrowing the latter and on each side of which it communicates with the first and second ducts respectively, and **in that** the nozzle has an inclined annular lip (55), the free edge of which rests against the same shoulder.

11. Condenser according to one of Claims 3 to 10, **characterized in that** the first and second ducts (42, 41) are arranged respectively downstream and upstream of the reservoir (2b).

12. Condenser according to one of the preceding claims, **characterized in that** the base (30) is brazed onto the external face of a tubular wall delimiting the collector box (2d).

13. Condenser according to Claim 12, **characterized in that** the connecting ducts (42, 41) run roughly at a tangent to the said tubular wall and open laterally through the latter.
